(19) Europäisches Patentamt
European Patent Office
Office européen des brevets

(11) Publication number: **0 156 219**
**B1**

(12) **EUROPEAN PATENT SPECIFICATION**

(45) Date of publication of patent specification: **15.02.89**

(51) Int. Cl.[4]: **C 08 K 13/02** // (C08K13/02, 3:22, 5:06, 5:10)

(21) Application number: **85102614.6**

(22) Date of filing: **07.03.85**

(54) **Flame-retardant resin composition.**

(30) Priority: **13.03.84 JP 47892/84**

(43) Date of publication of application:
**02.10.85 Bulletin 85/40**

(45) Publication of the grant of the patent:
**15.02.89 Bulletin 89/07**

(84) Designated Contracting States:
**DE FR GB**

(58) References cited:
**FR-A-2 248 298**
**US-A-4 016 137**

**CHEMICAL ABSTRACTS, vol. 99, no. 24, 12 December 1983, p. 42, no. 196013t, Columbus, Ohio (US); & JP-A-58 65 741 (TORAY INDUSTRIES INC) 19-04-83**

(73) Proprietor: **DAICEL CHEMICAL INDUSTRIES CO., LTD.**
**1-banchi, Teppo-cho**
**Sakai-shi Osaka 590 (JP)**

(72) Inventor: **Imai, Tatsuhiko**
**428-73, Fushiya-cho**
**Izumi-shi Osaka (JP)**
Inventor: **Kawasawa, Masuo**
**3-3-23, Asakayama-cho**
**Sakai-shi Osaka (JP)**

(74) Representative: **Patentanwälte Grünecker, Dr. Kinkeldey, Dr. Stockmair, Dr. Schumann, Jakob, Dr. Bezold, Meister, Hilgers, Dr. Meyer-Plath**
**Maximilianstrasse 58**
**D-8000 München 22 (DE)**

**EP 0 156 219 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a resin composition containing a flame-retarded thermoplastic resin wherein the impact resistance of the thermoplastic resin is not damaged and the light resistance is excellent.

Plastic materials are used in various fields. High-impact polystyrene, ABS resin, or other styrenic thermoplastic resins are, for example, used as automobile components, electrical appliances, constructional materials, or various molding articles, due to their excellent impact resistance and moldability.

Various legal requirements are made, however, as the application of these thermoplastic resins is broadened. High flame retardance is demanded for flame-retardant materials. For office automation equipment, which is a most rapidly developing field, not only flame retardance but also excellent light resistance are required.

The following two methods of producing flame-resistant thermoplastic resins, which are inherently combustible, are generally employed:

(a) a so-called flame retardant addition method, characterized in that a relatively low-molecular flame retardant containing a large amount of halogen, e.g., a combination of tetrabromobisphenol A (TBBA) and triphenyl phosphate (TPP) (Japanese Patent Publication No. 37106/1976) or a combination of decabromodiphenyl ether and antimony trioxide (Japanese Patent Laid-open No. 187450/1983) is incorporated, and

(b) a so-called blending method, characterized in that a halogen-containing high-molecular compound such as polyvinyl chloride (PVC) is blended (Japanese Patent Publication No. 40893/1973).

The compositions in which polyvinyl chloride or other chlorine-containing, flame-retardant compounds are incorporated show a more excellent anti-dripping effect in flame resistance and a higher light resistance than those in which bromine-containing, flame-retardant compounds are incorporated, but their heat stability is so poor that PVC is likely to be pyrolitically decomposed at the molding temperatures of thermoplastic resins, which may often result in the corrosion of molds.

Though the composition in which bromine-containing, flame-retardant compounds are incorporated are less light-resistant than those in which chlorine-containing, flame-retardant compounds are incorporated, thermoplastic resin compositions in which bromine-containing flame retardants are incorporated are used at present because of their excellent heat stability.

There are high-molecular bromine-containing, flame-retardant compounds and low-molecular ones. The compositions in which high-molecular bromine-containing flame retardants are incorporated have improved heat deformation temperatures and excellent heat stability compared to those in which low-molecular ones are incorporated, but are disadvantageous in largely lowered fluidity, poor moldability, large decrease in impact resistance, and costliness.

The low-molecular bromine-containing flame retardants include (a) high-melting retardants having a melting point higher than 250°C, which are as excellent in heat stability as the high-molecular type, but disadvantageous in largely deteriorated fluidity, poor moldability, formation of flow marks on the surface of the molded articles, and largely decreased impact resistance, and (b) low-melting retardants having a melting point of lower than 250°C, which are excellent in fluidity, improved in moldability, and not largely deteriorated in impact resistance, but disadvantageous in low heat deformation temperatures and poor heat stability, which limit the molding temperature range of thermoplastic resins.

The thermoplastic resins flame-retarded with the bromine-containing, flame-retardant compounds described above are largely discolored by irradiation with ultraviolet light in sunlight or fluorescent light, and this disadvantage must be met with by painting the molded articles or using other methods.

Flame-retardant resin compositions having excellent light resistance have not yet been developed.

It is the object of the present invention to provide a resin composition having improved flame-retardance and light-resistance.

Said object is achieved by a resin composition which comprises 100 parts by weight of a thermoplastic resin and 9 to 55 parts by weight of an additive mixture comprising (A) 3 to 35 parts by weight of a tetrahalogenated bisphenol A carbonate oligomer, (B) 3 to 35 parts by weight of bis(tribromophenoxy)ethane and (C) 0.5 to 15 parts by weight of antimony trioxide, the ratio by weight of (A) to (B) being from 25/75 to 75/25.

Based on the finding that a combustible thermoplastic resin, which has been known to be converted into a light-resistant and flame-retardant resin composition by the incorporation of a combination of a high molecular type tetrahalogenated bisphenol A carbonate oligomer and antimony trioxide or a combination of a low-molecular type bromine-containing flame retardant and antimony trioxide, said resin can be remarkably flame-retarded and improved in light resistance by the incorporation of a combination of a high-molecular halogen-containing flame-retardant/low-molecular bromine-containing flame-retardant mixture and antimony trioxide.

When either the tetrahalogenated bisphenol A carbonate oligomer or bis(tribromophenoxy)ethane is incorporated singly, the flame-retardant effect is lowered, i.e., it takes approximately at least the double total combustion time, as measured in the combustibility test according to UL—94, when compared with that of the combination of these flame-retardants. This complex flame retardant composed of a

tetrahalogenated bisphenol A carbonate oligomer and bis(tribromophenoxy)ethane exerts an unexpected synergic effect on thermoplastic resins in the flame retarding of them. The reason has not yet been clarified, but the compatibility in chemical structure of the present complex flame retardant with thermoplastic resins is attributable to this effect, i.e., the flame retardance of thermoplastic resins may be improved and the physical and thermal characterisitics maintained by the improvement in dispersibility and compatibility of the resin because aqromatc rings are contained in both of the compounds which the present complex flame retardant comprises. Moreover, a combination of said flame-retardant resin composition and a benzophenone or benzotriazole ultraviolet light absorber shows excellent light resistance. The use of this combination protectsa the resin from practically harmful discoloration by ultraviolet light, from which conventional flame-retardant compositions, in which bromine-containing flame retardants are incorporated, have suffered.

The thermoplastic resin used in the present invention includes, for example, polymers and copolymers of styrene, α-methylstyrene and butylstyrene, impact-resistant polystyrene containing coreacting or incorporated elastomers, styrene-acrylonitrile copolymers, acrylonitrile-butadiene-styrene (ABS) graft polymers, acrylonitrile-butadiene-α-methylstyrene-methacrylate-graft polymers, copolymers of styrene and acrylic or methacrylic acid or an ester thereof, copolymers of maleic anhydride or an ester thereof and styrene and acrylonitrile-styrene-ethylene-propylene tetrapolymer (AES).

The polymerization can be effected by any of the emulsion, bulk, solution, and suspension polymerization methods.

Any of the compounds containing 2 to 10, preferably 3 to 7 units represented by the general formula:

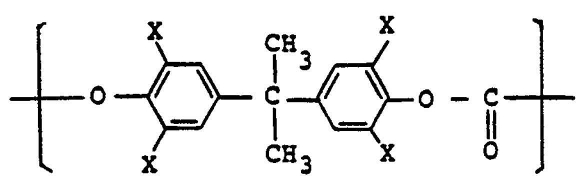

(wherein X represents bromine or chlorine) can be used as the tetrahalogenated bisphenol A carbonate oligomer (A) of the present invention.

The carbonate oligomer is prepared from 2,2-(4,4'-dihydroxy-3,3',5,5'-tetrahalodiphenyl)propane, i.e., tetrahalogenated bisphenol A, in an ordinary phosgene method, by chain termination in the presence of an organic monohydroxy compound or other monofunctional compounds, for example, phenol, p-t-butylphenol, or other lower alkylphenol or lower alkylhalophenol. A compound in which 50% by weight or less, based on the amount of the tetrahalogenated bisphenol A, or a bisphenol A containing no halogens is copolymerized is also included in the tetrahalogenated bisphenol A carbonate oligomer of the present invention.

A carbonate oligomer derived from 2,2-(4,4'-dihydroxy-3,3',5,5'-tetrabromodiphenyl)propane is preferably used as the component (A) of the present invention.

The amount of carbonate oligomer is within the range of 3 to 35 parts by weight, preferably 5 to 30 parts by weight, based on 100 parts by weight of the thermoplastic resin.

The larger the amount of the carbonate oligomer, the higher the flame retardant of the thermoplastic resin of the present invention. If it exceeds 35 parts by weight, however, the fluidity and the impact resistance of the resin composition are largely deteriorated.

The low-molecular bromine-containing flame retardant used as component (B) of the present invention is bis(tribromophenoxy)ethane. The effect of the present invention cannot be exerted without the use of this flame retardant.

Bis(tribromophenoxy)ethane is incorporated in an amount ranging from 3 to 35 parts by weight, preferably from 5 to 30 parts by weight, based on 100 parts by weight of the thermoplastic resin.

The larger the amount of bis(tribromophenoxy)ethane, the higher the flame retardance of the composition. If the amount exceeds 35 parts by weight, however, the heat resistance of the resin composition is largely deteriorated.

Antimony trioxide, which is component (C) of the present invention, is an essential component for the efficient preparation of a highly flame-retardant resin composition.

Antimony trioxide is incorporated in an amount ranging from 0.5 to 15 parts by weight, preferably from 5 to 13 parts by weight, based on 100 parts by weight of the thermoplastic resin.

Antimony trioxide serves as flame-retardant auxiliary for halogen-containing organic compounds. It must be present in an amount ranging from 1/6 to 1/2, preferably from 1/5 to 1/2.5 of the halogen-containing organic compound.

The thermoplastic resin composition of the present invention can be endowed with high flame retardance by incorporating 9 to 55 parts by weight in total of a high-molecular halogen-containing flame retardant as the component (A), a low-molecular bromine-containing flame retardant as the component (B), and antimony trioxie as the component (C) in 100 parts by weight of the thermoplastic resin. If the total amount of the components (A), (B), and (C) exceeds 55 parts by weight, the impact resistance is extremely deteriorated, though the high flame retardance is maintained. Satisfactory flame retardance cannot be

obtained if the amount is smaller than 9 parts by weight. Moreover, the physical properties of the resin composition is deteriorated, the process is economically disadvantageous, and no sufficient light resistance can be expected without the use of the present complex flame retardant. The incorporation ratio of the component (A) to the component (B) is within the range of 25/75 to 75/25 (weight ratio).

The benzophenone or benzotriazole ultraviolet light absorber used in the present invention includes, for example, 2-hydroxy-4-methoxybenzophenone, 2,4-dihydroxybenzophenone, 2,2'-dihydroxy-4-methoxybenzophenone, 2-(2'-hydroxy-5'-methylphenyl)-benzotriazole, 2-(2'-hydroxy-3'-t-tubyl-5'-methylphenyl)-5-chloro-benzotriazole, 2-(2'-hydroxy-3',5'-t-butylphenyl)-5-chlorobenzotriazole.

Said ultraviolet light absorber is incorporated in an amount ranging from 0.01 to 5 parts by weight, preferably from 0.05 to 3 parts by weight, in 100 parts by weight in total of the thermoplastic resin and the components (A), (B), and (C).

Besides the above four components, ordinarily used additives, for example, heat stabilizers, antioxidants, lubricants, or coloring agents may optionally be incorporated.

A mixture of the thermoplastic resin, (A) the tetrahalogenated bisphenol A carbonate oligomer, (B) bis(tribromophenoxy)ethane, (C) antimony trioxide, and the ultraviolet light absorber of the present invention can be easily prepared with a conventional device such as a heated roll, a Banbury mixer, or an extruder, without specified means or order.

Figure 1 illustrates the relationship between the proportion (wt%) of the tetrabromobisphenol A carbonate oligomer/bis(tribromophenoxy)ethane complex flame retardant and the combustion time measured by the UL—94, 0.159 cm (1/16") combustion test.

The present invention will now be described in more detail by the following examples and comparative examples, in which the ratios of incorporation are all represented by parts by weight.

In the following examples, the combustibility was tested according to the Subject 94, regulated by Underwriters' Laboratories (referred to as UL—94) in U.S.A.

The specimens, which were 12.7 (5 inches) long, 1.27 cm (1/2 inch) wide, and 0.159 cm (1/16 inch) thick, were classified into four groups according to their grades of flame resistance, i.e., BN (Burning), 94V—2, 94V—1, and 94V—0. The combustion time was represented by the total combustion time of the five specimens.

The heat deformation temperatures were determined by the testing method according to ASTM D—648 (load: 18.56 kg/cm$^2$), the Izod impact strength according to ASTM D—256 (0.635 cm (1/4 inch) in width, with a notch, at 23°C) and the melt flow rate according to ASTM D—1238 (230°C; load: 5 kg).

The light resistance was measured according to the testing method of JIS K 7102, by measuring changes in color tone of the samples after the test with a color difference meter manufactured by Nihon Denshoku and calculating the color differnece (ΔE) by the L, a, b method. The larger values of ΔE show the greater discoloration. When the ΔE value exceeds 12, the changes in color tone become appreciable with regard to the visual sensation.

Examples 1 to 3 and Comparative Examples 1 to 4

ABS resin, a tetrabromobisphenol A carbonate oligomer (n = 3), bis(tribromophenoxy)ethane, and antimony trioxide were blended according to the formulations shown in Table 1, and pelletized in an extruder having a cylinder temperature of 230°C to form thermoplastic resin compositions. Specimens were prepared from the compositions with a jet molder having a cylinder temperature of 230°C. The results of evaluating these compositions are shown in Table 1. The relationship between the proportion (wt %) of a tetrabromobisphenol A carbonate oligomer/bis(tribromophenoxy)ethane complex flame retardant incorporated in the resin composition and the combustion time measured by the UL—94, 0.159 cm (1/16 inch) combustion test is illustrated in Figure 1.

As understood from Table 1 and Figure 1, the thermoplastic resin composition of the present invention, in which a tetrabromobisphenol A carbonate oligomer and bis(tribromophenoxy)ethane are used in combination, shows an outstandingly shortened combustion time and an unexpectedly remarkable effect with the formulation ratios ranging from 75/25 to 25/75. The examples show that the thermoplastic resin compositions of the present invention have excellent fluidity, impact resistance, heat deformation temperature, and light resistance.

It may be understood from Comparative Examples 3 and 4, wherein only one of the flame retardants is used instead of the combination of the carbonate oligomer and bis(tribromophenoxy)ethane used in Example 2 that the compositions containing only one of the flame retardants are disadvantageous for practical use not only because of their prolonged combustion time but also because of the unbalanced characteristics of fluidity, impact resistance, and heat deformation temperature, as compared with those containing a complex flame retardant.

TABLE 1

| | Conditions | Comp. Ex. 1 | Ex. 1 | Ex. 2 | Ex. 3 | Comp. Ex. 2 | Comp. Ex. 3 | Comp. Ex. 4 |
|---|---|---|---|---|---|---|---|---|
| ABS | parts | 100 | 100 | 100 | 100 | 100 | 100 | 100 |
| antimony trioxide | parts | 7 | 7 | 7 | 7 | 7 | 7 | 7 |
| tetrabromobisphenol A carbonate oligomer | parts | 30 | 26 | 17.5 | 9 | 5 | 35 | — |
| bis(tribromophenoxy)ethane | parts | 5 | 9 | 17.5 | 26 | 30 | — | 35 |
| UL—94 combustion time (sec) | 0.159 cm (1/16″) | 60 | 30 | 15 | 20 | 50 | 70 | 50 |
| flame resistance class | 0.159 cm (1/16″) | 94V—1 | 94V—0 | 94V—0 | 94V—0 | 94V—0 | 94V—1 | 94V—0 |
| heat deformation temperature °C | FS = 18.56 kg/cm$^2$ | 99 | 96 | 89 | 86 | 81 | 100 | 78 |
| Izod impact strength, kg-cm/cm | with a notch | 10 | 13 | 15 | 17 | 17 | 5 | 18 |
| melt flow rate, g/10 min | 230°C, 5 kg | 12 | 13 | 18 | 21 | 24 | 8 | 25 |
| light resistance, ΔE | 50 h | 10 | 9 | 8 | 8 | 7 | 11 | 7 |
| (fadeometer) | 100 h | 16 | 16 | 15 | 15 | 14 | 17 | 14 |

Examples 4 and 5 and Comparative Examples 5 to 10

The results of the test in which smaller amounts of the bromine-containing flame retardants used in Example 2 were incorporated are shown in Table 2, Examples 4 and 5.

It is evident from the results that the composition of the present invention is excellent in flame retardance, impact resistance, fluidity, heat decomposition temperature, and light resistance.

In Comparative Examples 5 and 6, instead of the combination of the tetrabromobisphenol A carbonate oligomer and bis(tribromophenoxy)ethane used in Example 5, only one of them was incorporated. The results show that the obtained products are disadvantageous for practical use because of their deteriorated flame retardance as well as their unbalance in other characteristics.

In Comparative Examples 7 and 8 a low-molecular bromine-containing flame retardant, i.e., tetrabromobisphenol A or decabromodiphenyl ether, was used instead of the bromine-containing flame retardant used in Comparative Example 6. The obtained products were disadvantageous for practical use because of their unbalance in flame retardance, impact resistance, fluidity, heat deformation temperature, light resistance, and other characteristics, as compared with the one obtained in Example 5.

In Comparative Examples 9 and 10, instead of the low-molecular bromine-containing flame retardant used in Example 5, i.e., bis(tribromophenoxy)ethane, the flame retardant of the same series, i.e., bis(pentabromophenoxy)ethane or tetrabromobisphenol A, was incorporated. The obtained products were disadvantageous for practical use because of their deteriorated flame retardance and unbalance in impact and light resistances.

TABLE 2

| | Conditions | Ex. 4 | Ex. 5 | Comp. Ex. 5 | Comp. Ex. 6 | Comp. Ex. 7 | Comp. Ex. 8 | Comp. Ex. 9 | Comp. Ex. 10 |
|---|---|---|---|---|---|---|---|---|---|
| ABS resin | parts | 100 | 100 | 100 | 100 | 100 | 100 | 100 | 100 |
| antimony trioxide | parts | 7 | 7 | 7 | 7 | 7 | 7 | 7 | 7 |
| tetrabromobisphenol A carbonate oligomer | parts | 15 | 12.5 | 25 | — | — | — | 12.5 | 12.5 |
| bis(tribromophenoxy) ethane | parts | 15 | 12.5 | — | 25 | — | — | — | — |
| bis(pentabromophenoxy) ethane | parts | — | — | — | — | — | — | 12.5 | — |
| tetrabromobisphenol A | parts | — | — | — | — | 25 | — | — | 12.5 |
| decabromodiphenyl ester | parts | — | — | — | — | — | 25 | — | — |
| UL—94 combustion time (sec) | 0.159 cm (1/16") | 25 | 35 | >250 | 70 | >250 | 50 | 150 | >250 |
| flame resistance class | 0.159 cm (1/16") | 94V—0 | 94V—0 | BN | 94V—1 | BN | 94V—0 | 94V—1 | BN |
| heat deformation temperature °C | FS = 18.56 $kg/cm^2$ | 89 | 89 | 96 | 80 | 80 | 91 | 91 | 89 |
| Izod impact strength, kg-cm/cm | with a notch | 16 | 18 | 6 | 23 | 10 | 10 | 6 | 8 |
| melt flow rate, g/10 min | 230°C, 5 kg | 18 | 18 | 10 | 20 | 20 | 4 | 1 | 18 |
| light resistance, ΔE | 50 h | 8 | 8 | 11 | 7 | 15 | 40 | 14 | 14 |
| (fadeometer) | 100 h | 15 | 15 | 17 | 14 | 30 | 50 | 20 | 30 |

Examples 6 to 13 and Comparative Examples 11 to 12

A benzophenone or benzotriazole ultraviolet light absorber was added to the formulation of Example 2. The results are shown in Table 3, Examples 6 to 13. As understood from the table, the compositions obtained in these examples are excellent in light resistance, and still well balanced in various characteristics as shown in Example 2.

Comparative Examples 11 and 12 show results obtained with ACS and ABS/PVC flame-retardant compositions manufactured by other companies. They are as little superior to the compositions of the present invention obtained in Example 12 in light resistance because their flame-retardant component consists of chlorine-containing polymers, but disadvantageous in their unbalance in heat deformation temperature, fluidity, and other characteristics and the poor moldability, which makes the molding within the range of the molding temperatures of thermoplastic resins difficult.

| | Ex. 6 | Ex. 7 | Ex. 8 | Ex. 9 | Ex. 10 | Ex. 11 | Ex. 12 | Ex. 13 | Comp. Ex. 11 | Comp. Ex. 12 |
|---|---|---|---|---|---|---|---|---|---|---|
| composition of Example 3 | 100 | 100 | 100 | 100 | 100 | 100 | 100 | 100 | | |
| 2,4-dihydroxybenzophenone | 1 | | | | | | | | | |
| 2-hydroxy-4-methoxybenzophenone | | 1 | | | | | | | | |
| 2,2′-dihydroxy-4-methoxybenzophenone | | | 1 | | | | | | | |
| 2-(2′-hydroxy-5′-methylphenyl)benzotriazole | | | | 1 | | | | | | |
| 2-(2′-hydroxy-3′-t-butyl-5′-methylphenyl)-5-chlorobenzotriazole | | | | | 1 | | 0.5 | 3 | | |
| 2-(2′-hydroxy-3′,5′-t-butylphenyl)-5-chloro-benzotriazole | | | | | | 1 | | | | |
| ACS manufactured by another company | | | | | | | | | 100 | |
| ABS/PCV manufactured by another company | | | | | | | | | | 100 |
| light resistance ΔE 50 h | 5 | 5 | 3 | 3 | 2 | 2 | 2 | 2 | 0.5 | 0.5 |
| (fadeometer) 100h | 7 | 7 | 3 | 3 | 2.5 | 2.5 | 3 | 2 | 2.5 | 3.5 |
| heat deformation temperature, °C | 89 | 89 | 89 | 89 | 89 | 89 | 89 | 88 | 81 | 75 |
| Izod impact strength, kg-cm/cm | 15 | 15 | 15 | 15 | 15 | 15 | 15 | 15 | 8 | 12 |
| melt flow rate, g/10 min | 18 | 18 | 18 | 18 | 18 | 18 | 18 | 19 | 7 | 7 |
| UL—94, 0—159 cm (1/16″), flame resistance class | 94V-0 | 94V-0 | 94V-0 | 94V-0 | 94V-0 | 94V-0 | 94V-0 | 94V-0 | 94V-0 | 94V-0 |

## Claims

1. A resin composition which comprises 100 parts by weight of a thermoplastic resin and 9 to 55 parts by weight of an additive mixture comprising (A) 3 to 35 parts by weight of a tetrahalogenated bisphenol A carbonate oligomer, (B) 3 to 35 parts by weight of bis(tribromophenoxy)ethane and (C) 0.5 to 15 parts by weight of antimony trioxide, the ratio by weight of (A) to (B) being from 25/75 to 75/25.

2. The composition of claim 1, which further contains 0.01 to 5 parts by weight, based on 100 parts by weight of the composition, of a benzophenone or benzotriazole ultraviolet light absorber.

## Patentansprüche

1. Harzzusammensetzung, die 100 Gewichtsteile eines thermoplastischen Harzes und 9 bis 55 Gewichtsteile einer Zusatzmischung, umfassend (A) 3 bis 35 Gewichsteile eines tetrahalogenierten Bisphenol A-Carbonatoligomers, (B) 3 bis 35 Gewischsteile Bis(tribromphenoxy)ethan und (C) 0,5 bis 15 Gewichsteile Antimontrioxid, umfaßt, wobei das Gewichtsverhältnis von (A) zu (B) 25/75 bis 75/25 beträgt.

2. Zusammensetzung nach Anspruch 1, die weiterhin 0,01 bis 5 Gewichsteile eines Benzophenon- oder Benzotriazol-UV-Absorptionsmittels, bezogen auf 100 Gewichtsteile der Zusammensetzung, enthält.

## Revendications

1. Composition de résine qui comprend 100 parties en poids d'une résine thermoplastique et 9 à 55 parties en poids d'un mélange additif comprenant:

(A) de 3 à 35 parties en poids d'un oligomère de carbonate de bisphénol A tétrahalogéné,

(B) de 3 à 35 parties en poids de bis(tribromophénoxy)éthane, et

(C) de 0,5 à 15 parties en poids de trioxyde d'antimoine, le rapport en poids de (A) à (B) étant de 25/75 à 75/25.

2. Composition suivant la revendication 1, qui contient de plus de 0,01 à 5 parties en poids, sur la base de 100 parties en poids de la composition, d'un absorbant de lumière ultraviolette de type benzophénone ou benzotriazole.

Fig.

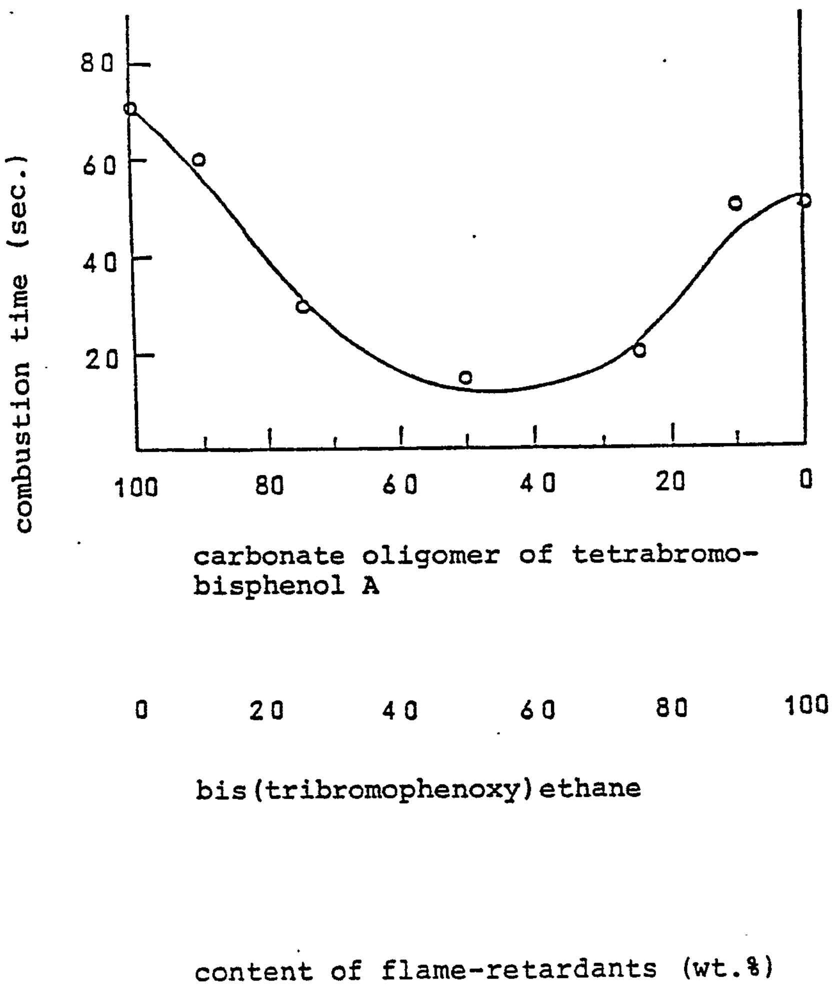
combustion time (sec.)
80
60
40
20
100
80
60
40
20
0
carbonate oligomer of tetrabromo-bisphenol A
0
20
40
60
80
100
bis(tribromophenoxy)ethane
content of flame-retardants (wt.%)